# EUROPEAN PATENT SPECIFICATION

(11) **EP 2 079 600 B1**
(45) Date of publication and mention of the grant of the patent: **26.10.2011**
(21) Application number: 07847116.6
(22) Date of filing: 06.11.2007
(51) Int. Cl.: B60K 15/04

(54) **SYSTEM FOR FILLING A TANK**
SYSTEM ZUM FÜLLEN EINES TANKS
SYSTEME DE REMPLISSAGE D'UN RESERVOIR

(30) Priority: 08.11.2006 FR 0609756
(43) Date of publication of application: 22.07.2009
(73) Proprietor: Inergy Automotive Systems Research (Société Anonyme), 1120 Bruxelles (BE)
(72) Inventor: RUNARVOT, Hervé, 53260 Entrammes (FR); FAVROULT, Laurent, 53470 Sace (FR)
(74) Representative: Jacques, Philippe
(86) International application number: PCT/EP2007/061926
(87) International publication number: WO 2008/055895

(56) References cited:
- US-A- 4 176 867
- US-A- 5 791 387
- US-A- 5 988 238
- US-A1- 2005 194 810

## Description

The present invention relates to a system for filling a tank, in particular a fuel tank.

The fill pipes present in fuel tanks, in particular the tanks aboard motor vehicles, are sealed during normal use of the tank, outside the filling periods. Sealing is generally performed by means of a cap that is introduced into the upper part of the pipe while transmitting a rotational movement thereto in order to close the pipe in a liquid-tight and gas-tight manner.

The operations of removing the cap before filling the tank, of replacing this cap and of closing the pipe after filling are most of the time carried out manually by the user. When the tank filling is finished, it may sometimes be forgotten to replace the cap and this then gives rise to the loss of this cap and to the pipe remaining open to the atmosphere for an indeterminate time. During this period, loss of liquid fuel may occur and vapours escape into the atmosphere.

For the purpose of preventing loss of the cap and contamination of the atmosphere which results therefrom, sealing systems integrated into the fill pipe, often called "capless" systems, have been proposed, replacing the traditional cap.

Thus, Application FR 2861655 in the name of the Applicant provides an automatic integrated stopper system comprising an inlet valve which opens (swings by rotation about an axle) under the action of a fill nozzle and which is lockable using a cylinder actuator comprising a rod that is retractable via a linear movement. Such a blocking mechanism is bulky and, moreover, acts very locally on the stopper and therefore risks damaging it in the case where a user would try to force its movement in the blocked position.

Hence, Application WO 2005/105505, also in the name of the Applicant, provides an improved locking device comprising a moveable part and an actuator, the moveable part comprising a locking valve and the actuator controlling the positioning, by rotation, of the locking valve in a slot of the pipe head so as to prevent the inlet valve from swinging. As the rotation of the locking valve takes place about an axle parallel to the axis of the pipe head, this valve is therefore completely outside of the pipe in the open position of the device, hence is a substantial encumbrance in this position.

The closest prior art document, US 5,791,387 discloses a closable fuel fill inlet stub, particularly to fill lead-free gasoline into the fuel tank of a motor vehicle. To securely retain a valve flap against an opening in a fill end stub for liquid fuel, typically unleaded gasoline, a pivotable engagement finger is engageable with the flap and held against the opening by an operating system operable by the vehicle operator, for selective engagement of the finger against the underside of the flap to selectively press the flap against the opening and close the opening, or to permit pivoting of the flap away from the opening if an appropriate gasoline fill-in nozzle is pressed against the flap. The flap of that disclosure does not provide a guide relief for the fill nozzle when the system is unlocked.

US 4,176,867 discloses a locking cap for a fuel tank with remote unlocking control. The locking cap for fuel tanks is provided with electro-mechanical locking means whereby the cap can be unlocked by remote control. The cap comprises a body member having a lid pivotable thereon. A spring-urged pivotable locking device on said body engages a spindle attached to the underside of the lid to hold the latter in a locked position. A spring-urged locking slider engageable with a stop formed on said locking device is controlled by a pair of pivoted armatures which are articulated to said slider. On energization of a U-shaped electromagnet attracting the armatures the latter effect disengagement of the slider from the locking device which releases the spindle thus unlocking the lid. This disclosure does not solve the problems of the above mentioned disclosures.

To solve this problem, the Applicant has imagined a locking device in which the locking valve can be rotated about an axle substantially perpendicular to the axis of the pipe head, and preferably positioned in the vicinity of the edge of the valve so that, in the open (retracted) position, the encumbrance that it causes in the vicinity of the pipe is minimal. In such a device, it is possible therefore to use a locking valve having a large surface area and therefore to better spread the stress in case the user attempts to force it.

The present invention hence relates to a system for filling a tank as defined in claim 1.

The present invention may be applied to any type of tank intended to be filled using an "automatic" filling nozzle (that stops automatically at the end of filling). It gives good results with fuel tanks.

In the device according to the invention, the tank is composed of a sealed chamber, the shape of which is not important. The tank should normally be produced from a material that is leak-tight and chemically inert to the liquids for which it is intended, for example to the volatile liquid fuels derived from oil, used for motor vehicle propulsion. Examples of liquids that can be used in the tank to which the invention relates comprise fuels for supplying motor vehicle engines, in particular petrol and diesel, and organic liquids used as fuel or oxidant for supplying fuel cells intended to generate an electric current. Materials that can be used to produce the tank especially comprise metals (particularly steel) and plastics. Advantageously, polymers and copolymers derived from olefins, particularly ethylene, are used. Polyethylene, and in particular high-density polyethylene (HDPE), is especially recommended in the case of tanks intended for volatile liquid fuels derived from oil.

The wall of the tank may be composed of a single thermoplastic layer, or of two layers. One or more other possible additional layers may, advantageously, be composed of layers made of a barrier material to liquids and/or gases. Preferably, the nature and thickness of the barrier layer are chosen so as to minimize the permeability of liquids and gases in contact with the internal surface of the tank. Preferably, this layer is based on a barrier resin, that is to say a resin that is impermeable to the fuel such as, for example, EVOH (a partially hydrolysed ethylene/vinyl acetate copolymer). Alternatively, the tank may be subjected to a surface treatment (fluorination or sulphonation) for the purpose of making it impermeable to the fuel.

The tank according to the invention preferably comprises an EVOH-based barrier layer located between the HDPE-based outer layers.

The filling system according to the invention comprises a fill pipe and a pipe head preferably comprising an outlet opening and an inlet opening sealed by a pivoting valve. This valve is generally a plate which can have any shape. However, given that the inlet and outlet openings of the head are generally circular, it is generally a circular plate. This plate generally swings/pivots inside the pipe head under the action of a fill nozzle. This movement is preferably a rotation about an axle located in one end (in the vicinity of a tangent to the circumference) of the valve. The inlet valve is generally kept in its closed position by a prestressed part (spring, for example). In one preferred variant, this part and the axle form only one part, i.e. the axle consists of a rigid prestressed spring. It should be noted that this variant also gives good results outside the scope of the invention, for any valve that swings about an axle and that seals a fill pipe (head).

Preferably, the possible and preferred constituent materials for the pipe, head, valve and stopper are plastics. Polyamides (preferably reinforced, with glass or carbon fibres for example) and polyacetals (such as POM, or polyoxymethylene) give good results.

The locking valve of the system according to the invention may have any shape. However, this will preferably be adapted both to having a large contact surface with the inlet valve when the system is locked and to having a guide relief for introducing a fill nozzle when the system is unlocked. One shape which is particularly suitable is that of a kind of hollow moon-shaped crescent or, in other words: of a portion of an annular part, this part having a central orifice that has:
- a curved internal relief, i.e. a section that varies continuously and takes the shape of a concave internal surface;
- on the upper face of the annular part, a diameter slightly greater than that of the inlet valve and on the lower face of the annular part, a diameter less than that of this same valve so that this face can effectively block the valve when the system is locked.

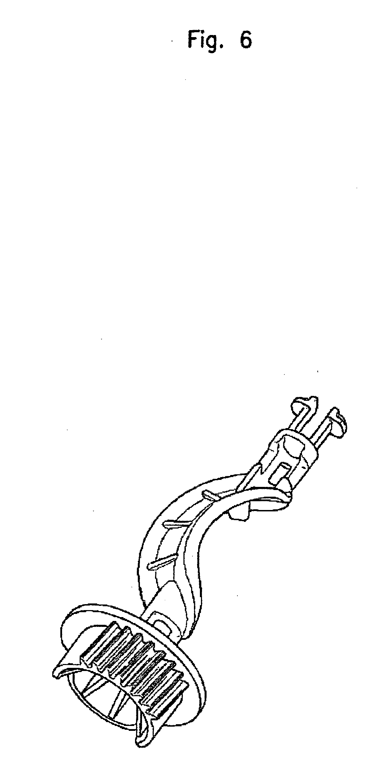

Such a geometry is illustrated in Figure 6 appended to the present document.

According to the invention, the locking valve can be rotated about an axle which is substantially perpendicular to the axis of the pipe head. Preferably, this axle is located under one end of the inlet valve (in the vicinity of a tangent to its lower curcumference). It may be a "physical" axle (continuous rod) integrated into or fixed to the pipe head. However, preferably, it is a "virtual" axle (i.e. not being in the conventional form of a continuous rod inserted into a valve housing) which makes up an integrated part of the locking valve and the ends of which are formed by excrescences of said valve enabling their rotation and/or attachment in the pipe head to be ensured. Preferably, the rotational axle of the valve substantially coincides with its axis of symmetry so that the valve in fact turns on itself, about its axle. It therefore does not occupy more space in rotation than at rest, as opposed to a valve which pivots by swinging about an axle located at one of its ends and which itself moves into a certain volume inside the pipe when it swings.

In the system according to the invention, the actuator may be located in proximity to said valve or in the passenger compartment of the vehicle. It may be a mechanical actuator (manually activated) such as a button or another easily handled part that is attached to the valve or an actuator that is controlled electrically, electromagnetically or manually. This actuator may be combined with locking of the vehicle doors, the opening, closing and locking functions brought together in one and the same part creating a substantial cost saving and facilitating the assembly onto the vehicle.

Preferably, the actuator of the system according to the invention comprises a motor (preferably electric) that sets in motion at least one moveable part (for example a rod which moves forward/moves back; an endless screw which turns in one direction or in the other, etc.). Most particularly preferably, the motor directly sets in motion a moveable part, which in turn sets in motion a second moveable part. Preferably, the latter is attached to the locking valve and its movement is rotary so as to make the locking valve rotate about its axle.

A simple actuator which gives good results is an actuator comprising:
- an endless screw;
- an electric motor capable of rotating the endless screw both to the right and to the left; and
- a (fraction of a) (toothed) wheel equipped with gears that are complementary to the endless screw thread, and arranged perpendicular to and in contact with this endless screw;
said wheel being integrated into or fixed to one end of the locking valve.

In this variant, when the motor turns the endless screw, the latter in turn causes the wheel to rotate which entrains the rotation of the valve about its axle in order to unlock the system. Rotation of the endless screw in the opposite direction returns the wheel and the valve to their initial position (of locking the system). To prevent any contact between the electric motor and the fuel (liquid or vapour), the former is preferably in a fuel-proof housing.

So that the user knows what state the system according to the invention is in (locked or unlocked), it is advantageous for this system to comprise a mechanism for displaying said state. In the case of a system with a toothed wheel (for example, such as that described above), a simple means of achieving this consists in integrating into said wheel a display surface that turns with said wheel and comprises two different logos that are respectively visible to the user when the system is in the locked and unlocked position. It may, for example, be a green padlock for the unlocked position and a red padlock for the locked position. In this variant, the pipe head preferably comprises a window, the location of which is such that the green or red padlock respectively is displayed therein depending on the position of the wheel.

The attachment of the locking valve and of its actuation mechanism in the fill head may be carried out in any known manner that allows the rotation of said valve. In order to facilitate the replacement of these components when they are damaged, it is advantageous to ensure that they can be disassembled easily without damaging the head. One way which is particularly suitable consists in providing the valve, preferably at one of its ends (attachment excrescences), with two prestressed flexible tongues which are inserted into an orifice of the pipe head, which are, by default, kept apart in this orifice and which comprise spurs (endings, excrescences) of suitable size and geometry so that when the tongues are pinched (manually or using a suitable tool, such as pliers for example) by means of these spurs (to place them side by side with one another) the valve can easily be removed from the system. As regards the actuation mechanism of the valve, it is preferably at least partly attached to an outer housing of the pipe head and produced in several parts so as to be opened and closed easily in order to replace possibly defective parts. As already mentioned above, this housing is preferably fuel-proof.

The present invention may be applied to any filling system comprising an inlet valve that swings under the action of a fill nozzle. In particular, it gives good results with systems comprising, in addition, a stopper subjacent to said valve and ensuring leak-tight closure of the system, even in the unlocked position of the valve.

Any stopper may be used for the system according to this variant of the invention. It may be, for example, a second valve that pivots under the action of a fill nozzle and which may or may not also be lockable.

According to another variant, which is preferred, the stopper is a rotary slide valve such as described in the aforementioned Application FR 2 861 655 and of which the content is, for this purpose, incorporated by reference in the present application. In this variant, the inlet valve is connected to the slide valve by a coupling member so that a pressure exerted on the valve by a fill nozzle causes the valve to swing in the fill head and the slide valve to rotate, placing a cylindrical opening of said slide valve in alignment with the inlet and outlet openings of the head.

In one particular embodiment, the coupling member comprises two engaged pinions, one of the pinions being attached to the slide valve and the other pinion being attached to the valve. In this embodiment, the rotation of the valve about its pivot automatically causes a corresponding rotation of the slide valve in the pipe head, via the two pinions. In that way, a pressure exerted on the valve with a fill nozzle indeed causes the valve to swing in the head and the slide valve to rotate, placing a cylindrical opening of said slide valve in alignment with the inlet and outlet openings of the head.

It should be noted that in these variants, the slide valve generally lies on an intermediate part which may provide a ventilation function while filling. In this variant, the pipe head is in fact formed of a housing surrounding the slide valve, that comprises a side wall, an upper wall to which the inlet valve is attached and a lower wall formed by said intermediate part.

According to one variant that is particularly preferred in the case of fuel tanks which is described in Application FR 06/07001 in the name of the Applicant (the content of which is incorporated by reference in the present application), the rotation of the slide valve also causes the movement of a part which, in its open position, enables fuel to drain from the pipe head to the tank, and in its closed position, enables water optionally present in the head to be discharged to the outside.

Other particularities and features of the invention will appear from the description of an advantageous embodiment given below, by way of illustration, with reference to the appended drawings which show:
- Fig. 1: a view of a system according to one variant of the invention in its closed and locked position;

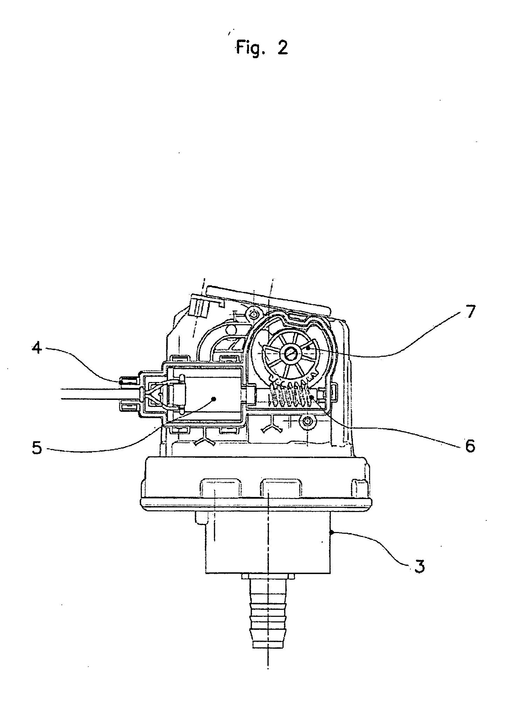

- Fig. 2: a cross-sectional view of this same system in the same position, through a plane that cuts the actuator of the locking mechanism so that the constituent components are shown;
- Fig. 3: a view still of the same system in the same position, but where the outer housing of the pipe head has been removed so that the components included in said head are shown;
- Fig. 4: a similar view (same system, housing removed) but where the system is in its unlocked and open position;
- Fig. 5: a similar view to that of Figure 3, but of a system according to another variant of the invention (including a device for displaying the state of the system) and seen from another angle; and
- Fig. 6: an enlarged top view of the locking valve illustrated in these figures for the purpose of better illustrating its geometry.

In these figures, identical components bear identical numbers.

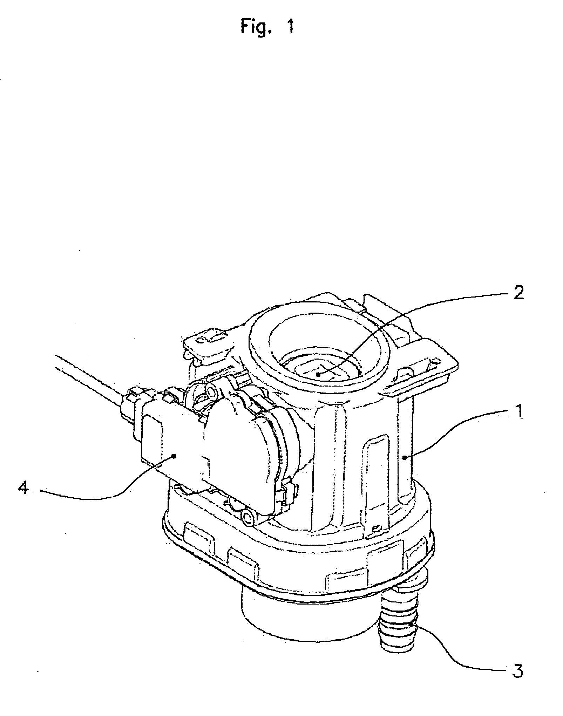

In Figure 1, a pipe head can be seen that comprises a housing (1) equipped with an inlet valve (2) capable of opening under the action of a fill nozzle. The lower wall of the housing is formed by an intermediate part (3) that provides a degassing function while filling. The housing also comprises a side excrescence equipped with a cover, these two parts delimiting a secondary housing (4) contained in which is an actuation system for locking the valve (2).

This system is shown in detail in the following figures where it can be seen that it comprises a motor (5) driving an endless screw (6) that interacts with a wheel (7) integrated into one end of a locking valve (8).

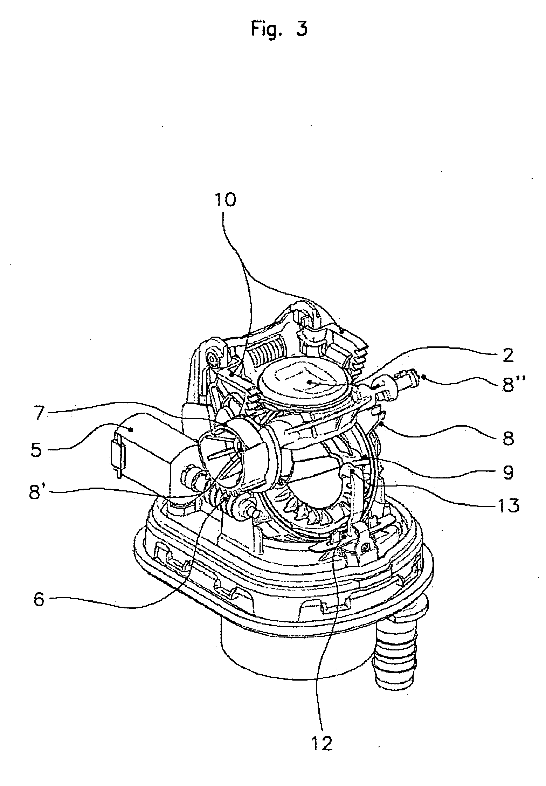

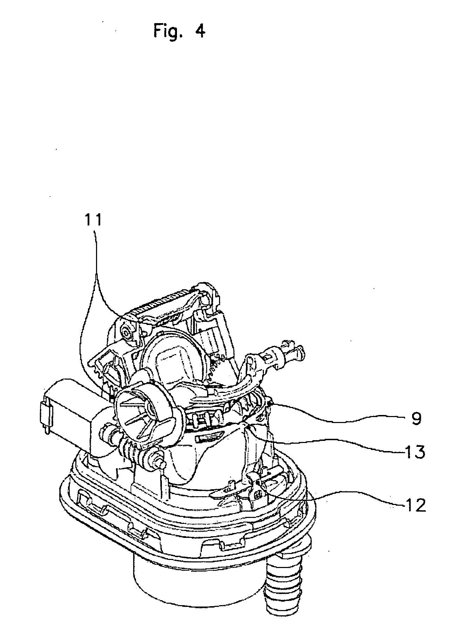

In Figures 3 and 4, it can be seen that under the housing (1) is a rotary slide valve (9) the rotation of which is caused by swinging of the inlet valve (2) due to a pair of pinions (10) borne by the valve (2) and a pair of complementary pinions (11) borne by the slide valve (9). It is also possible to see therein a drainage system (12), which in the position illustrated in Figure 3, makes it possible to discharge liquid which might be present in the head to the outside, and in the position illustrated in Figure 4, makes it possible to drain fuel to the inside of the pipe. It is the rotation of the slide valve (9) which has moved this system from one position to another via a part having a hook-shaped end (13).

In these figures, the locking mechanism according to one advantageous variant of the invention is formed by the locking valve (8) which is illustrated in its locking position in Figure 3 and in its unlocking position in Figure 4. Passing from one of these positions to the other takes place with a rotation, in an appropriate direction, of the wheel (7) driven by the endless screw (6) moved using the motor (5). Swinging of the valve from its closed position (illustrated in Figure 3) to its open position (illustrated in Figure 4) has itself been caused by a pressure, using a fill nozzle (not illustrated), on the valve once the system is unlocked.

The locking valve (8) has the shape of a hollow moon-shaped crescent as described previously. Its rotational axle is a "virtual" axle that passes through its two ends, of which one (8') is the centre of the wheel (7) and of which the other (8") comprises two lamellae equipped with spurs that enable easy assembly/disassembly in the housing (1).

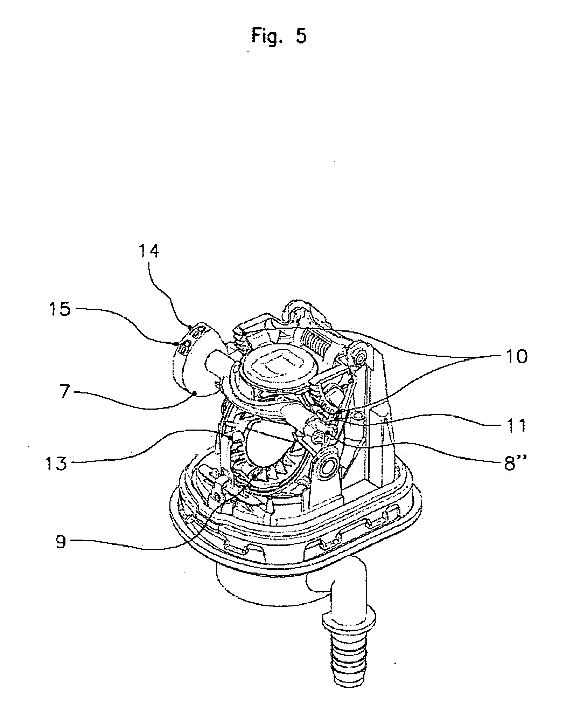

In Figure 5, the previously described variant can be seen, according to which the wheel (7) integrates a surface displaying two different logos (14, 15) that are respectively visible to a user when the system is in the locked position and when it is in the unlocked position (which is that illustrated). These logos are composed of a green padlock (14) for the unlocked position and a red padlock (15) for the locked position. In this variant, the housing (which is not illustrated) comprises a window, the location of which is such that the green padlock (14) or red padlock (15) respectively are displayed therein (depending on the position of the wheel (7)).

## Claims

1. System for filling a tank, said system comprising a fill pipe and a pipe head comprising an inlet valve (2) and a locking mechanism comprising a moveable part and an actuator, the moveable part comprising a locking valve (8) and the actuator (5, 6, 7) controlling the positioning, by rotation, of the locking valve (8), wherein the locking valve (8) can be rotated about an axle substantially perpendicular to the axis of the pipe head, **characterized in that** the locking valve (8) has the shape of a portion of an annular part, this part having a central orifice that has :
- a curved internal relief, i.e. a section that varies continuously and takes the shape of a concave internal surface ;
- on the upper face of the annular part, a diameter slightly greater than that of the inlet valve (2) and on the lower face of the annular part, a diameter less than that of the inlet valve (2) so that this face can effectively block the inlet valve (2) when the system is locked.

2. System according to the preceding claim, **characterized in that** the inlet valve (2) is a plate which swings/pivots inside the pipe head under the action of a fill nozzle and this being by rotation about an axle located in one end (in the vicinity of a tangent to the circumference) of the plate, and **in that** it is kept in its closed position by said axle which consists of a rigid prestressed spring.

3. System according to any one of the preceding claims, **characterized in that** the rotational axle of the locking valve (8) is a "virtual" axle making up an integrated part of the locking valve (8) and the ends (8', 8") of which are formed by excrescences of said locking valve (8) enabling their rotation and/or attachment in the pipe head to be ensured.

4. System according to any one of the preceding claims, **characterized in that** the actuator (5, 6, 7) comprises :
- an endless screw (6) ;
- an electric motor (5) capable of rotating the endless screw (6) both to the right and to the left ; and
- a (fraction of a) wheel (7) equipped with gears that are complementary to the endless screw (6) thread, and arranged perpendicular to and in contact with this endless screw (6) and being integrated into or fixed to one end (8') of the locking valve (8).

5. System according to the preceding claim, **characterized in that** the electric motor (5) is in a fuel-proof housing.

6. System according to Claim 4 or 5, **characterized in that** the wheel (7) integrates a surface displaying two different logos (14, 15) that are respectively visible to a user when the system is in the locked position and when it is in the unlocked position.

7. System according to any one of the preceding claims, **characterized in that** the locking valve (8) comprises two prestressed flexible tongues (8") which are inserted into an orifice of the pipe head, which are, by default, kept apart in this orifice and comprise spurs of suitable size and geometry so that the valve can easily be removed from the system by pinching the tongues by means of these spurs.

8. System according to any one of the preceding claims, **characterized in that** the pipe head comprises an outlet opening and an inlet opening sealed by the inlet valve (2), and also a stopper (9) subjacent to the inlet valve (2), this stopper (9) being a rotary slide valve connected to the inlet valve (2) by a coupling member comprising two engaged pinions (11), one of the pinions (11) being attached to the slide valve (9) and the other pinion being attached to the inlet valve (2) so that when the system is unlocked, a pressure exerted on the inlet valve (2) by a fill nozzle causes the inlet valve (2) to swing in the fill head and the slide valve (9) to rotate, placing a cylindrical opening of said slide valve (9) in alignment with the inlet and outlet openings of the pipe head.

9. Fuel tank equipped with a system according to any one of the preceding claims.

## Patentansprüche

1. System zum Füllen eines Tanks, wobei das System ein Kraftstoff-Einfüllrohr und einen Rohrkopf umfasst, der ein Einlassventil (2) und einen Verriegelungsmechanismus mit einem beweglichen Teil und einen Aktuator umfasst, wobei der bewegliche Teil ein Verriegelungsventil (8) umfasst und der Aktuator (5, 6, 7) die Positionierung, durch Drehung, des Verriegelungsventils (8) steuert, wobei das Verriegelungsventil (8) um eine Achse gedreht werden kann, die im Wesentlichen senkrecht zur Achse des Rohrkopfs verläuft, **dadurch gekennzeichnet, dass** das Verriegelungsventil (8) die Form eines Abschnitts eines ringförmigen Teils hat, wobei dieser Teil eine mittlere Öffnung aufweist, die:
- eine gekrümmte innere Strukturierung, das heißt einen Abschnitt aufweist, der sich kontinuierlich ändert und die Form einer konkaven Innenfläche annimmt;
- auf der Oberseite des ringförmigen Teils einen Durchmesser aufweist, der etwas größer ist als der des Einlassventils (2), und auf der Unterseite des ringförmigen Teils einen Durchmesser aufweist, der kleiner ist als der des Einlassventils (2), so dass diese Seite das Einlassventil (2) effektiv blockieren kann, wenn das System verriegelt ist.

2. System nach dem vorhergehenden Anspruch, **dadurch gekennzeichnet, dass** das Einlassventil (2) eine Platte ist, die in dem Rohrkopf unter der Wirkung einer Zapfpistole kippt/schwenkt, und dies durch Drehung um eine Achse, die in einem Ende (in der Nähe einer Tangente zum Umfang) der Platte positioniert ist, geschieht, und dass es durch die Achse, die aus einer starren, vorgespannten Feder besteht, in seiner geschlossenen Position gehalten wird.

3. System nach einem der vorhergehenden Ansprüche, **dadurch gekennzeichnet, dass** die Drehachse des Verriegelungsventils (8) eine "gedachte" Achse ist, die einen integrierten Teil des Verriegelungsventils (8) bildet und deren Enden (8', 8") durch Ausstülpungen des Verriegelungsventils (8) gebildet werden, die ihre Drehung und/oder Befestigung in dem Rohrkopf gewährleisten.

4. System nach einem der vorhergehenden Ansprüche, **dadurch gekennzeichnet, dass** der Aktuator (5, 6, 7) Folgendes umfasst:
- eine Schnecke (6)
- einen Elektromotor (5), der die Schnecke (6) sowohl nach rechts als auch nach links drehen kann; und
- ein(en Bruchteil eines) Rad(s) (7), (der) das mit Zahnrädern versehen ist, die zu dem Gewinde der Schnecke (6) komplementär sind, und senkrecht zu der Schnecke (6) und mit ihr in Kontakt angeordnet ist und in ein Ende (8') des Verriegelungsventils (8) integriert oder daran befestigt ist.

5. System nach einem der vorhergehenden Ansprüche, **dadurch gekennzeichnet, dass** sich der Elektromotor (5) in einem kraftstoffdichten Gehäuse befindet.

6. System nach Anspruch 4 oder 5, **dadurch gekennzeichnet, dass** das Rad (7) eine Fläche integriert, die zwei verschiedene Logos (14, 15) zeigt, die jeweils für einen Benutzer sichtbar sind, wenn sich das System in der verriegelten Position befindet und wenn es sich in der entriegelten Position befindet.

7. System nach einem der vorhergehenden Ansprüche, **dadurch gekennzeichnet, dass** das Verriegelungsventil (8) zwei vorgespannte flexible Zungen (8") aufweist, die in einer Öffnung des Rohrkopfs eingeführt sind und die als Standardeinstellung in dieser Öffnung auseinander gehalten werden und Zapfen mit einer geeigneten Größe und Geometrie aufweisen, so dass das Ventil durch Zusammenquetschen der Zungen mittels dieser Zapfen von dem System entfernt werden kann.

8. System nach einem der vorhergehenden Ansprüche, **dadurch gekennzeichnet, dass** der Rohrkopf eine Auslassöffnung und eine Einlassöffnung, die durch das Einlassventil (2) verschlossen wird, sowie einen unter dem Einlassventil (2) liegenden Verschluss (9) umfasst, wobei dieser Verschluss (9) ein Drehschieberventil ist, das durch ein Kopplungsglied mit dem Einlassventil (2) verbunden ist, wobei das Kopplungsglied zwei in Eingriff stehende Ritzel (11) umfasst, wobei eines der Ritzel (11) an dem Schieberventil (9) befestigt ist und das andere Ritzel an dem Einlassventil (2) befestigt ist, so dass, wenn das System entriegelt ist, ein durch eine Zapfpistole auf das Einlassventil (2) ausgeübter Druck ein Kippen des Einlassventils (2) in dem Einfüllkopf und eine Drehung des Schieberventils (9) bewirkt, wodurch eine zylindrische Öffnung des Schieberventils (9) in Ausrichtung auf die Einlass- und Auslassöffnungen des Rohrkopfs platziert wird.

9. Kraftstofftank mit einem System nach einem der vorhergehenden Ansprüche.

## Revendications

1. Système de remplissage d'un réservoir, ledit système comprenant une tubulure de remplissage et une tête de tubulure comprenant un volet d'entrée (2) et un mécanisme de verrouillage comprenant une pièce mobile et un actionneur, la pièce mobile comprenant un volet de verrouillage (8) et l'actionneur (5, 6, 7) commandant le positionnement par rotation du volet de verrouillage (8), dans lequel le volet de verrouillage (8) est mobile par rotation autour d'un axe substantiellement perpendiculaire à celui de la tête de tubulure, **caractérisé en ce que** le volet de verrouillage a la forme d'une portion de pièce annulaire, cette pièce ayant un orifice central présentant:
- un relief interne incurvé c.à.d. une section variant de manière continue et dessinant une surface interne concave;
- sur la face supérieure de la pièce annulaire, un diamètre légèrement supérieur à celui du volet d'entrée et sur la face inférieure de la pièce annulaire, un diamètre inférieur à celui de ce même volet de manière à ce que cette face puisse efficacement bloquer le volet lorsque le système est verrouillé.

2. Système selon la revendication précédente, **caractérisé en ce que** le volet d'entrée (2) est une plaque qui bascule/pivote à l'intérieur de la tête de tubulure sous l'action d'un pistolet de remplissage et ce par rotation autour d'un axe situé en une extrémité (au voisinage d'une tangente à la circonférence) de la plaque, et **en ce qu'**il est maintenu dans sa position de fermeture par ledit axe qui consiste en un ressort rigide précontraint.

3. Système selon l'une quelconque des revendications précédentes, caractérisé en que l'axe de rotation du volet de verrouillage (8) est un axe «virtuel» faisant partie intégrante du volet de verrouillage (8) et dont les extrémités (8', 8") sont constituées par des excroissances du volet de verrouillage (8) permettant d'en assurer la rotation et/ou la fixation dans la tête de tubulure.

4. Système selon l'une quelconque des revendications précédentes, **caractérisé en ce que** l'actionneur (5, 6, 7) comprend:
- une vis sans fin (6);
- un moteur électrique (5) susceptible de provoquer la rotation de la vis (6) tant à droite qu'à gauche; et
- une (fraction de) roue (7) munie d'engrenages complémentaires au pas de la vis (6), disposée perpendiculairement à et en contact avec cette vis (6) et étant intégrée ou fixée à une extrémité (8') du volet de verrouillage.

5. Système selon la revendication précédente, **caractérisé en ce que** le moteur électrique (5) se trouve dans un boîtier étanche au carburant.

6. Système selon la revendication 4 ou 5, **caractérisé en ce que** la roue (7) intègre une surface affichant deux logos (14, 15) différents respectivement visibles pour un utilisateur lorsque le système est en position verrouillée et lorsqu'il est en position déverrouillée.

7. Système selon l'une quelconque des revendications précédentes, **caractérisé en ce que** le volet de verrouillage (8) comprend deux languettes souples (8") précontraintes qui sont insérées dans un orifice de la tête de tubulure, qui sont par défaut maintenues écartées dans cet orifice et comprennent des ergots de géométrie et de taille appropriées pour que l'on puisse aisément retirer le volet du système par pincement des languettes au moyen des ergots.

8. Système selon l'une quelconque des revendications précédentes, **caractérisé en ce que** la tête de tubulure comprend une ouverture de sortie et une ouverture d'entrée obturée par le volet d'entrée (2), ainsi qu'un obturateur (9) sous jacent au volet d'entrée (2), cet obturateur (9) étant un boisseau rotatif relié au volet d'entrée (2) par un organe d'accouplement comprenant deux pignons en prise (11), l'un des pignons (11) étant solidaire du boisseau (9) et l'autre pignon étant solidaire du volet d'entrée (2) de telle sorte que lorsque le système est déverrouillé, une poussée exercée sur le volet d'entrée (2) par un pistolet de remplissage provoque un basculement du volet d'entrée (2) dans la tête de remplissage et une rotation du boisseau (9), plaçant une ouverture cylindrique dudit boisseau dans l'alignement des ouvertures d'entrée et de sortie de la tête de tubulure.

9. Réservoir à carburant équipé d'un système selon l'une quelconque des revendications précédentes.
